# EUROPEAN PATENT SPECIFICATION

(11) **EP 2 559 551 B1**
(45) Date of publication and mention of the grant of the patent: **04.04.2018**
(21) Application number: 10849811.4
(22) Date of filing: 13.04.2010
(51) Int. Cl.: B44C 1/14, B32B 15/082, B32B 27/30, B32B 37/16

(54) **METAL EFFECT DECORATION SHEET, PRODUCTION METHOD THEREOF, AND RESIN MOLDED OBJECT**
ZIERFOLIE MIT METALLEFFEKT, HERSTELLUNGSVERFAHREN DAFÜR UND HARZFORMOBJEKT
FEUILLE DÉCORATIVE À EFFET MÉTALLIQUE, PROCÉDÉ POUR SA PRODUCTION ET OBJET MOULÉ EN RÉSINE

(43) Date of publication of application: 20.02.2013
(73) Proprietor: Wavelock Advanced Technology Co., Ltd, Tokyo 104-0044 (JP)
(72) Inventor: FUJIWARA Takamichi, Koga-shi Ibaraki 306-0240 (JP)
(74) Representative: Grünecker Patent- und Rechtsanwälte PartG mbB
(86) International application number: PCT/JP2010/056590
(87) International publication number: WO 2011/128973

(56) References cited:
- JP-A- 2002 370 311
- JP-A- 2005 246 891
- JP-A- 2005 246 891
- JP-A- 2005 262 447
- JP-B2- 2 615 468
- JP-B2- 2 615 468

## Description

### [Technical Field]

This invention relates to a metallic decoration sheet, a method of the same, and a resin molded product that is molded using the relevant metallic decoration sheet, which add fresh texture to a surface of a resin product, such as car interior or exterior, furniture, architectural material, bag, home electric appliances, audio product, personal computer, mobile phone, camera, video camera, advertizing display, name plate, frame, amusement product like pachinko or pachisuro, and various sundries.

### [Background Art]

When making a resin molded product, a method of inserting a metallic decoration sheet into a mold so as to add metallic texture on a surface of the molded product, or a method of attaching the metallic decoration sheet to a base resin sheet by extrusion-laminating before molding by vacuum molding to add metallic texture on a surface of the molded product makes it possible to replace conventional metal material, and to save process flow, and coinstantaneously, to reduce cost and weight, thereby various technologies relevant to metallic decoration sheet has been advocated.

The applicant has ever advocated some technologies regarding such metal decoration sheet.

Advocated in the technology described in the Japanese Patent Application Laid-Open Publication No. 2004-1243, one of the proposed technologies, is a metallic decoration sheet that includes in this order a transparent or translucent surface film layer, an adhesive layer, a metal layer retention film layer with a metal layer on at least one side, an adhesive layer, and a base film layer, and is formed of polyester polymer compound in which the metal layer retention film layer has benzene ring and naphthalene ring as a main chain, or polyester polymer compound in which the metal layer retention film layer has benzene ring and cyclohexane ring as a main chain.

Herein, it is preferable to employ acrylic resin film as the surface film layer of the metallic decoration sheet because of its high transparency, and good moldability, and capability to add abrasion-resistance, chemical-resistance, and weather-resistance to an end product thereof, i.e., mold product, but its difficultness for handling by virtue of its breakability usually requires more than 50 micrometers (µm) in thickness, and it is difficult to handle what is thinner than such thickness.

On the contrary, the technology described in the PTL 1 makes it possible to form metal layer by vacuum applied technology such as vacuum evaporation coating on metal retention film made of thin polyester polymer compound of 20 µm for example, and in a metal layer forming process on the film composed of steps of: accommodating material film roll into a metal layer forming device, reducing pressure in the device, forming metal layer, deactivating pressure reduction, and removing metal layer formed film out of the device, it is made possible to elongate film length of one roll which the metal layer forming device can accommodate, and to thereby substantially reduce cost of metal layer forming that largely accounts for that of making metallic decoration sheet.

However, the metal layer retention film made of polyester polymer compound having benzene ring and naphthalene ring as a main chain, or polyester polymer compound having benzene ring and cyclohexane ring as a main chain was especially selected as a film suitable for deep carving, but its film formability cannot suit recent exacting requirement, posing drawbacks not to follow product form in a deep carved molded product or a molded product especially with acute edge.

Also, transparency of the film made of these polyester polymer compound is low, and thereby such brightness of metallic texture was not obtained as has recently been required.

Furthermore, because adhesive between the polyester polymer film and evaporation coating metal is low, there has been an induced drawback that residual stress in the film causes exfoliation at the interface between the film and the evaporation coating metal under high temperature condition such as heat test of 100°C x 24 hours (h) for example.

The technology described in Japanese Patent Application Laid-Open Publication No. 2005-262447 over the drawbacks does not employ polyester polymer film, thereby resolving drawbacks resulting from the aforementioned polyester polymer film, but requires process for preliminarily providing barrier layer made of polyurethane resin on acrylic resin film, and once sticking protect film in order to prevent damage upon winding in a roll shape of the acrylic resin film for metal layer forming, and further reduces its productivity upon metal layer forming, which results from its thickness of the acrylic resin film, inducing significant low productivity and incurring high cost.

### [Citation List]

### [Patent Literature]

[PTL 1]
   Japanese Patent Application Laid-Open Publication No. 2004-1243
[PTL 2]
   Japanese Patent Application Laid-Open Publication No. 2005-262447
[PTL 3]
   Japanese Patent Application Laid-Open Publication No. 2005-246891

### [Summary of Invention]

### [Technical Problem]

Object of the present invention is to provide a metallic decoration sheet which more improves metallic gloss than conventional products; keeps its good metallic appearance enough to equal gloss plate products even with deep carving or acute edge; and has good workability, low production cost; but does not induce exfoliation at the interface even under high temperature.

### [Solution to Problem]

In order to attain the above-mentioned object, the inventor, applying the technology recited in the Japanese Patent Application Laid-Open Publication No. 2005-246891 (PTL 3), made, accounted, and studied prototype without hair line. Consequently, it was found that the technology recited in the publication cannot provide metallic exterior with gloss and quality appearance equal to gloss plate products even without forming hair line, which results from its surface condition of metal layer, which led to the present invention.

Namely, according to a first aspect of a method of the present invention, a method for making of the metallic decoration sheet includes the steps of: attaching a thermoplastic resin sheet via a first adhesive layer to a metal layer side face of a transfer film having the metal layer disposed on a smooth mold release face of a mold release substrate so as to obtain a base sheet; removing the mold release substrate from the base sheet to obtain an intermediate laminate sheet; and attaching an acrylic resin film as the outermost surface film layer via a second adhesive layer to a metal layer side face of the intermediate laminate sheet.

According to a second aspect of the present invention a metallic decoration sheet as defined in claim 2 made by the method for making metallic decoration sheet according to the first aspect.

A resin molded product according to a third aspect of the present invention is molded using the metallic decoration sheet according to the second aspect.

### [Advantageous Effects of Invention]

According to the method of making the metallic decoration sheet of present invention, provided is the metallic decoration sheet which improves its metallic gloss more than that of conventional products; keeps its good metallic appearance enough to equal gloss plate products even with its deep carving or acute edge; and has good workability, low production cost; but does not induce exfoliation at the interface even under high temperature.

The metallic decoration sheet of the present invention improves its metallic gloss more than conventional products; keeps its well metallic exterior enough to equal gloss plate products even with its deep carving or acute edge; has cheap production cost; but does not induce exfoliation at the interface even under high temperature.

The resin molded product of the present invention improves its metallic gloss more than that of conventional products; keeps its good metallic exterior enough to equal gloss plate products even with its deep carving or acute edge; and has cheap production cost; but does not induce exfoliation at the interface even under high temperature.

### [Brief Description of Drawings]

[Fig. 1A]

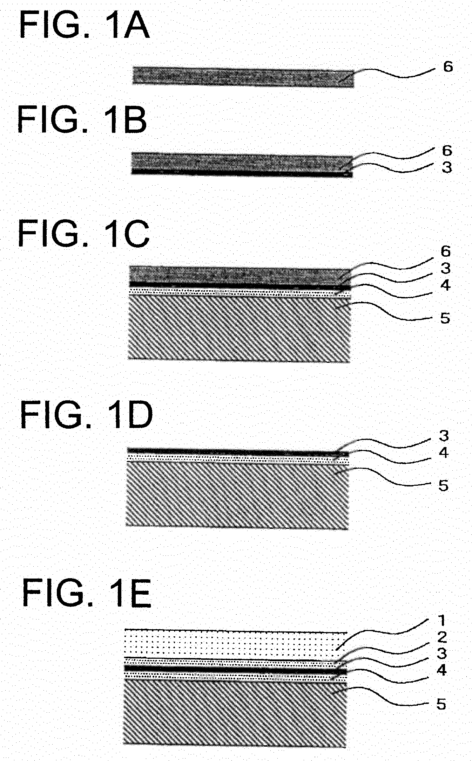

   FIG. 1A is a model view illustrating a method for making metallic decoration sheet according to the present invention.
[Fig. 1B]
   FIG. 1B is a model view illustrating a method for making metallic decoration sheet according to the present invention.
[Fig. 1C]
   FIG. 1C is a model view illustrating a method for making metallic decoration sheet according to the present invention.
[Fig. 1D]
   FIG. 1D is a model view illustrating a method for making metallic decoration sheet according to the present invention.
[Fig. 1E]
   FIG. 1E is a model view illustrating a method for making metallic decoration sheet according to the present invention.
[Fig. 2]

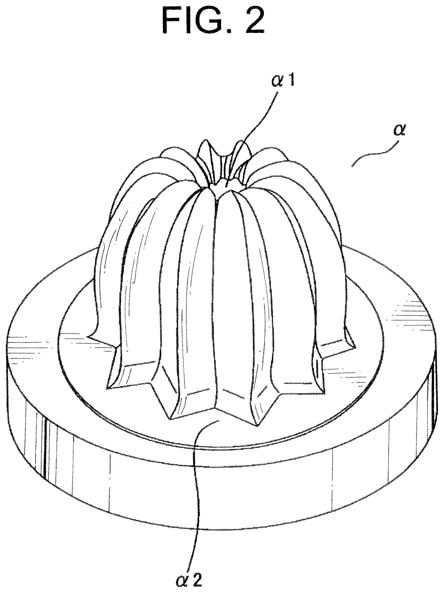

   FIG. 2 is a model view illustrating a mold applied to molding test in an embodiment.

### [Description of Embodiments]

A method for making of a metallic decoration sheet includes, as mentioned above, the successive steps of: attaching a thermoplastic resin sheet via a first adhesive layer to a metal layer side face of a transfer film composed of the metal layer formed on a smooth mold release face of a mold release substrate; removing the mold release substrate to obtain a intermediate laminate sheet; and attaching acrylic resin film via a second adhesive layer to a metal layer side face of the intermediate laminate sheet.

The mold release substrate employed in the present invention (reference sign 6 in FIG. 1A) is made of film-like material advantageous to a mold release property for the formed metal layer, and needs to have good smoothness on at least one face (that is, metal layer forming face) . Cited as those having such smoothness is commercially available typical resin film.

Further preferably, those which are cost-favorable and avoid cut or crack in the case of thinning to wind in a roll shape make the metal layer cost-favorable. Cited as such is polyethylene terephthalate, or biaxial stretched film made of such polyethylene terephthalate, which biaxial stretched film made of such polyethylene terephthalate is preferable in that the film with smooth and little thickness unevenness can be obtained cost-favorably. In addition, on a surface where such the metal layer of film is formed is processed mold release treatment such as silicon coating so as to form mold release layer.

A thickness of the mold release material, as aforementioned, is desired to be thinned as far as mechanical strength (stretch) is kept because the thinner, the lower the cost of metal layer becomes, typically, being made 12 to 100 µm.

On such the smooth mold release face of the mold release substrate is formed metal layer (reference sign 3 in FIG. 1B). The metal layer is formed through vacuum applied technology such as vacuum evaporation coating, CVD, ion-plating, plasma-CVD, or spattering. In this case, it is cost-favorable in forming of metal layer to contain longer film (or sheet) in these vacuum containers of limited size.

Though cited as employing metal are aluminum, chrome, indium, tin, nickel or alloy of these, tin or indium are preferable especially because they are capable of ensuring sufficient metallic gloss even at its edge, and have high corrosion resistance.

It is preferable that thickness of metal layer to form metal retention film is from 10 to 100 nanometers (nm). In the case of 10nm or less it is not enough to form metal layer, whereas it is impractical in the case of 100 nm or more because of high cost.

At this time a face of the mold release substrate of forming metal layer becomes smooth because it is formed along a smooth face of the mold release substrate, and in the metallic decoration sheet of the present invention, such smooth metal face forms an advantageous metallic decoration sheet by being positioned on the acrylic resin film side.

As mentioned above, after obtaining of transfer film made to form metal layer disposed on the smooth mold release of the mold release substrate, to the metal layer side face of the transfer film is attached thermoplastic resin sheet (reference sign 5 in FIG. 1C) via a first adhesive layer (reference sign 4 in FIG. 1C) (process of attaching base sheet).

It is necessary for adhesive material that forms the first adhesive layer to have heat resistance against at least heat generated in molding using the metallic decoration sheet relevant to the present invention. Cited as such is urethane series adhesive. The first adhesive layer may be formed only on the face of the metal layer, on the thermoplastic resin sheet, or both of them. The thickness of this first adhesive layer is typically designed from 2 to 50 µm.

The heat plasticity sheet is a part which composes a base sheet of the metallic decoration sheet relevant to the present invention, and as resin composing such thermoplastic resin sheet are adequately selected, in light of its recyclability, from such acrylonitrile-butadiene-styrene copolymer, polypropylene, polycarbonate series resin, polystyrene, and polyvinyl chloride, in conformity with resin for forming finished molded product.

Also, while the thickness of the thermoplastic resin sheet is determined in light of its usability, moldability, stiffness, or cost, it is typically designed from 100 to 1,000 µm.

Then, the mold release substrate is exfoliated and removed, so as to obtain intermediate laminate sheet (process of removing mold release substrate (refer to FIG. 1D)). At this time removal condition (that is, removal angel, removal speed, and removal tensility) is adjusted so as to avoid the metal layer being exfoliated from the intermediate laminate sheet or damaged.

Then, attaching of surface film is processed for attaching acrylic resin film (see reference sign 1 in FIG. 1E) to the face of the metal layer via an adhesive material (reference sign 2 in FIG. 1E).

Namely, because an outmost layer has high transparency and advantageous moldability, to which abrasion resistance chemical resistance and weather resistance are added, the outmost layer is required to be composed of acrylic resin film as noted. Herein, the acrylic resin is polymer that is mainly composed of methacrylate ester, and cited as single polymer are polymethylmethacrylate, polyethylmethacrylate, polybutylmethacrylate, polyethylhexylmethacrylate, and the like. Also, the acrylic resin may be copolymer with methacrylate ester and other monomer, and cited as such are polymethylmethacrylate-styrene polymer and the like. Furthermore, the acrylic resin may be alloy with methacrylate resin and other resin, and cited as such are polymethylmethacrylate-polyvinylidene fluoride alloy and the like. Furthermore, rubber particles may be contained in order to add flexibility thereto.

Typically, acrylic resin film is preferably arranged 50 µm or more in thickness, which is required by careful handling due to its breakability. Also, it may be unlikely to obtain richness or gloss as decoration sheet if it is made 50 µm or less in thickness. On the contrary, thickening too much of the acrylic resin causes inability to follow sharpness of the mold, degradation of sticking workability, and high cost, and thereby thickness thereof is typically made 500 µm or less, preferably 250 µm or less. Furthermore, it is preferable to make parallel light beam transparency rate thereof 90 % because of sufficient richness or gloss as decoration sheet.

Note that acrylic resin film may be either colorless or colored, as well as either transparent or translucent.

An adhesive that forms a second adhesive between the acrylic resin film and the metal layer is basically composed of transparent adhesive, but may be colored. Coloring is made to contain coloring material such as pigment or dye and adhesive material base. Containment of such coloring material and adhesive material is readily made by such resolver to evenly disperse.

It is unlikely to obtain its richness in the second adhesive material layer when containing the coloring material, if containment ratio of the coloring material respective to the adhesive material is too high or low. Scope of optimum containment is, but depending on color of the coloring material or application thereof, preferably from 0.5 up to 100 parts by weight per adhesive material of 100 parts by weight, more preferably from 1 up to 50 parts by weight.

Rendering the thickness of the second adhesive material layer more than 10 µm makes the metallic decoration sheet have sufficient richness and bright coloration. However, rendering the thickness thereof less than 10 µm may unlikely make it have sufficient richness and bright coloration. Preferred scope is 15 µm or more. Note that although it is possible to thicken more, of the order of 50 µm, which likely induces decrease of its quality due to bad drying of diluting solvent of the adhesive material, typically it is preferable to render the above scope 30 µm or less.

Although such thick adhesive material layer is not typical, it is also possible to effectively form uniform thickness on one side of the aforementioned acrylic resin film by applying adhesive material containing coloring material through dye coating method for example.

Herein, known as manufacturer of dye coater is Inoue Kinzoku Kogyou Co,. Ltd., or Hirano Tecseed Co., Ltd.

The adhesive material to form the second adhesive material layer between the acrylic resin layer and the metal layer is required to have heat resistance at least resisting heat upon molding by employing the metallic decoration sheet relevant to the present invention. Cited as such is urethane adhesive.

The decoration sheet formed as mentioned above is made molded product by vacuum molding, pressure-air molding, or vacuum pressure-air molding, or by insert molding after molded by such above molding and set in mold by inserting.

### Embodiment

Hereinafter, an embodiment of a metallic decoration sheet relevant to the present invention will specifically be discussed.

### <Preparing of transfer film>

On a face of mold release layer side of biaxial stretched polyethylene terephthalate film (marketed product) with its thickness of 12 µm was formed an indium layer with its thickness of 40 nanometers (nm) through vacuum evaporation coating to prepare a transfer film.

### <Laminating of base sheet>

As a thermoplastic resin sheet destined to be a base sheet was employed an acrylonitrile-butadiene-styrene copolymer sheet with its thickness of 250 µm.

Then, attached to a metal layer side of the aforementioned transfer film side was a thermoplastic resin sheet via a first adhesive material layer.

Specifically, to the face of the aforementioned transfer film side was applied an urethane adhesive material using dye coater in such a way as to make its thickness after dried 5 µm, then ethyl acetate of solvent was sufficiently evaporated and removed by heating, and then the aforementioned thermoplastic resin sheet was stuck thereon.

### <Removing of mold release substrate>

The aforementioned mold release substrate was exfoliated and removed to obtain a intermediate laminate sheet.

### <Laminating of surface film>

On one surface of a surface film, i.e., polymethylmethacrylate film (S001 made by Sumitomo Chemical Co., Ltd.) as acrylic resin film was applied the aforementioned urethane adhesive material a using dye coater in such a way as to make its thickness after dried 5 µm, then ethyl acetate of solvent was sufficiently evaporated and removed by heating to form adhesive material layer (that is, a second adhesive material layer), and which was then attached to a metal layer side of the aforementioned intermediate laminate sheet to obtain the metallic decoration sheet relevant to the present invention A.

### <Making of molded product>

The aforementioned metallic decoration sheet A relevant to the present invention was molded by vacuum molding using mold *α* shown in FIG. 2 to obtain molded product A1.

At this time, in order to most truly duplicate the molded product, molding was performed as adjusting molding condition (that is, molding temperature).

### <Evaluating of molded product>

The aforementioned molded product A1 was evaluated with respect to fidelity and metallic gloss under room light by collegial body of ten industrial designers (sensory rating below was evaluated by such the collegial body).

As a result, extremely high fidelity to mold was affirmed, and it was determined that metallic gloss was obtained throughout the molded product A1 in detail.

### <Comparison example B>

In a similar fashion as the metallic decoration sheet A, but to a metal layer side face of the transfer film made to form the metal layer on the smooth mold release of the mold release substrate was attached acrylic resin film via the adhesive material layer, and then the mold release substrate was exfoliated and removed, then to a metal layer side face of the layer was attached thermoplastic resin sheet to obtain metallic decoration sheet B relevant to the comparison example.

This metallic decoration sheet B was molded in the same fashion as the above to obtain molded product B. This molded product B1 was evaluated, exhibiting high fidelity but sad metal gloss and whitish appearance throughout surface of the molded product.

### <Comparison example C>

On one face of modified polyethylene terephthalate film with its thickness of 25 µm (TFLEX™ made by Teijin DuPont Film Co., Ltd. : polyethylene terephthalate film having main chain of FT-3 benzene ring and cyclohexane ring) as metal retention film was formed indium layer with thickness of 40 nm through vacuum evaporation coating method.

In a similar fashion as the first embodiment, attached to a metal layer side face of the indium layer formed metal layer retention film was the thermoplastic resin sheet via the adhesive material layer, then attached to a metal layer retention film side face of the layer was acrylic resin film via adhesive material layer to obtain metallic decoration sheet C relevant to the comparison example.

This metallic decoration sheet C was molded in the same fashion as the above to obtain molded product C1. This molded product C1 was evaluated, exhibiting no fidelity about shape of upstanding portion *α*1, and *α*2 of the mold *α* shown in FIG. 2, in addition, sad metal gloss as a whole, compared with plating.

### [Reference Signs List]

- 1: acrylic resin film
- 2: second adhesive material layer
- 3: metal layer
- 4: first adhesive material layer
- 5: thermoplastic resin sheet
- 6: mold release substrate

## Claims

1. A method for making a metallic decoration sheet, comprising the successive steps of:
attaching a thermoplastic resin sheet (5) via a first adhesive material layer (4) to a metal layer (3) side face of a transfer film having the metal layer (3) disposed on a smooth mold release face of a mold release substrate (6) so as to obtain a base sheet;
removing the mold release substrate (6) from the base sheet to obtain an intermediate laminate sheet; and
attaching an acrylic resin film (7) as the outermost surface film layer via a second adhesive material layer (2) to a metal layer (3) side face of the intermediate laminate sheet.

2. A metallic decoration sheet made using the method for making the metallic decoration sheet according to claim 1, comprising:
a thermoplastic resin sheet (5) as a base sheet;
a metal layer (3) attached to the thermoplastic resin sheet (5) via a first adhesive material layer (4); and
an acrylic resin film (7) as a surface sheet attached to the metal layer (3) via a second adhesive material layer (2),
wherein the acrylic resin film (7) is attached via the second adhesive material layer (2) to the metal layer (3) from which the mold release substrate (6) is removed.

3. A resin molded product molded using the metallic decoration sheet according to claim 2.

## Patentansprüche

1. Verfahren zum Herstellen einer metallischen Dekorationsfolie, umfassend die aufeinanderfolgenden Schritte:
Anbringen einer thermoplastischen Harzfolie (5) über eine erste Haftmaterialschicht (4) auf der Seitenfläche einer Metallschicht (3) eines Transferfilms, der die Metallschicht (3) abgeschieden auf einer glatten Formabgabefläche eines Formabgabesubstrats (6) besitzt, so dass eine Basisfolie erhalten wird;
Entfernen des Formabgabesubstrats (6) von der Basisfolie, um eine Zwischenlaminatfolie zu erhalten; und
Anbringen eines Acrylharzfilms (7) als die äußerste Oberflächenfilmschicht über eine zweite Haftmaterialschicht (2) auf der Seitenfläche einer Metallschicht (3) der Zwischenlaminatfolie.

2. Metallische Dekorationsfolie, die unter Verwenden des Verfahrens zum Herstellen einer metallischen Dekorationsfolie gemäß Anspruch 1 hergestellt ist, umfassend:
eine thermoplastische Harzfolie (5) als eine Basisfolie;
eine Metallschicht (3), die an der thermoplastischen Harzfolie (5) über eine erste Haftmaterialschicht (4) angebracht ist; und
einen Acrylharzfilm (7) als eine Oberflächenfolie, der an der Metallschicht (3) über eine zweite Haftmaterialschicht (2) angebracht ist,
wobei der Acrylharzfilm (7) über die zweite Haftmaterialschicht (2) auf der Metallschicht (3) angebracht ist, von dem das Formabgabesubstrat (6) entfernt wird.

3. Harzgeformtes Produkt, geformt durch Verwenden der metallischen Dekorationsfolie gemäß Anspruch 2.

## Revendications

1. Procédé de réalisation d'une feuille de décoration métallique, comprenant les étapes successives suivantes :
la fixation d'une feuille de résine thermoplastique (5) grâce à une première couche de matériau adhésif (4) à une face latérale de couche métallique (3) d'un film de transfert comportant la couche métallique (3) disposée sur la face de démoulage lisse d'un substrat de démoulage (6) de sorte à obtenir une feuille de base,
l'élimination du substrat de démoulage (6) de la feuille de base pour obtenir une feuille stratifiée intermédiaire, et
la fixation d'un film de résine acrylique (7), en tant que couche de film de surface la plus externe, grâce à une seconde couche de matériau adhésif (2), sur une face latérale de couche métallique (3) de la feuille stratifiée intermédiaire.

2. Feuille de décoration métallique réalisée en utilisant le procédé de réalisation d'une feuille de décoration métallique conforme à la revendication 1, comprenant :
une feuille de résine thermoplastique (5) utilisée en tant que feuille de base,
une couche métallique (3) fixée à la feuille de résine thermoplastique (5) grâce à une première couche de matériau adhésif (4), et
un film de résine acrylique (7) utilisé en tant que feuille de surface fixée à la couche métallique (3) grâce à une seconde couche de matériau adhésif (2),
dans laquelle le film de résine acrylique (7) est fixé, grâce à la seconde couche de matériau adhésif (2), à la couche métallique (3) de laquelle est supprimé le substrat de démoulage (6).

3. Produit moulé en résine, moulé en utilisant la feuille de décoration métallique conforme à la revendication 2.
